(19) Europäisches Patentamt
European Patent Office
Office européen des brevets

(11) Veröffentlichungsnummer: **0 519 248 A1**

(12) # EUROPÄISCHE PATENTANMELDUNG

(21) Anmeldenummer: **92109047.8**

(22) Anmeldetag: **29.05.92**

(51) Int. Cl.[5]: **C08L 77/00**, C08L 23/10, //(C08L77/00,23:10),(C08L23/10, 77:00)

(30) Priorität: **18.06.91 DE 4120007**

(43) Veröffentlichungstag der Anmeldung:
**23.12.92 Patentblatt 92/52**

(84) Benannte Vertragsstaaten:
**BE CH DE ES FR GB LI NL**

(71) Anmelder: **BASF Aktiengesellschaft**
**Carl-Bosch-Strasse 38**
**W-6700 Ludwigshafen(DE)**

(72) Erfinder: **Muehlbach, Klaus, Dr.**
**Im Zaunruecken 20**
**W-6718 Gruenstadt(DE)**
Erfinder: **Baierweck, Petra, Dr.**
**Sebastian-Kneipp-Strasse 19**
**W-6707 Schifferstadt(DE)**
Erfinder: **Mueller, Wolfgang F., Dr.**
**Im Biengarten 45**
**W-6730 Neustadt(DE)**
Erfinder: **Blinne, Gerd, Dr.**
**Im Woogtal 7**
**W-6719 Bobenheim(DE)**
Erfinder: **Ramlow, Gerhard, Dr.**
**Wintergasse 121**
**W-6940 Weinheim(DE)**

(54) **Thermoplastische Formmassen auf der Basis von teilaromatischen Copolyamiden und Polyolefinen.**

(57) Thermoplastische Formmassen, enthaltend
A) 4 - 94 Gew.-% eines teilaromatischen, teilkristallinen Copolyamids mit einem Diamingehalt von unter 0,5 Gew.-% aufgebaut aus
($A_1$) 20 - 90 Gew.-% Einheiten, die sich von Terephthalsäure und Hexamethylmediamin ableiten,
($A_2$) 0 - 50 Gew.-% Einheiten, die sich von $\epsilon$-Caprolactam ableiten
($A_3$) 0 - 80 Gew.-% Einheiten, die sich von Adipinsäure und Hexamethylendiamin ableiten,
($A_4$) 0 - 40 Gew.-% weiteren polyamidbildenden Monomeren
wobei der Anteil der Komponenten ($A_2$) oder ($A_3$) oder ($A_4$) oder deren Mischungen mindestens 10 Gew.-% beträgt,
B) 4 - 94 Gew.-% eines Polyolefinhomo- oder copolymerisats oder deren Mischungen,
C) 2 - 20 Gew.-% eines Haftvermittlers,
D) 0 - 20 Gew.-% eines schlagzäh modifizierenden Polymeren
E) 0 - 60 Gew.-% Zusatzstoffe und Verarbeitungshilfsmittel.

EP 0 519 248 A1

Die Erfindung betrifft thermoplastische Formmassen, enthaltend

A) 4 - 94 Gew.-% eines teilaromatischen, teilkristallinen Copolyamids mit einem Diamingehalt von unter 0,5 Gew.-% aufgebaut aus

($A_1$) 20 - 90 Gew.-% Einheiten, die sich von Terephthalsäure und Hexamethylendiamin ableiten,

($A_2$) 0 - 50 Gew.-% Einheiten, die sich von $\epsilon$-Caprolactam ableiten

($A_3$) 0 - 80 Gew.-% Einheiten, die sich von Adipinsäure und Hexamethylendiamin ableiten,

($A_4$) 0 - 40 Gew.-% weiteren polyamidbildenden Monomeren

wobei der Anteil der Komponenten ($A_2$) oder ($A_3$) oder ($A_4$) oder deren Mischungen mindestens 10 Gew.-% beträgt,

B) 4 - 94 Gew.-% eines Polyolefinhomo- oder copolymerisats oder deren Mischungen,

c) 2 - 20 Gew.-% eines Haftvermittlers,

D) 0 - 20 Gew.-% eines schlagzäh modifizierenden Polymeren

E) 0 - 60 Gew.-% Zusatzstoffe und Verarbeitungshilfsmittel.

Außerdem betrifft die Erfindung die Verwendung der thermoplastischen Formmassen zur Herstellung von Fasern, Folien und Formkörpern sowie die hierbei erhältlichen Formkörper.

Polyolefine wie Polypropylen zeichnen sich durch gute Lösungsmittelbeständigkeit, geringe Wasseraufnahme und sehr gute Verarbeitbarkeit aus, so daß für viele Anwendungen eine Kombination mit den allgemein höher schmelzenden Polyamiden wünschenswert ist.

Da beide Polymerphasen im allgemeinen nicht verträglich sind, müssen dessen Blends Verträglichkeitsvermittler (Haftvermittler) zugesetzt werden, um eine gute Dispergierung und gegenseitige Verankerung der beiden Polymerphasen zu erreichen.

Blends aus Polyolefinen und Polyamiden sind aus der GB-A 1 403 797 bekannt.

Die Blends enthalten als Haftvermittler ein mit Maleinsäureanhydrid gepfropftes Polypropylen.

Aus der DE-A 3 507 128 sind Terpolymere aus Ethylen, n-Butylacrylat und Acrylsäure als Haftvermittler in PP/PA Blends bekannt.

Aus der GB-A 2 226 035 sind Haftvermittlermischungen aus Polyolefinkautschuken, gepfropften Copolymeren des Polypropylens und einem gepfropften Polyolefinkautschuk bekannt.

Insgesamt weisen die aus dem Stand der Technik bekannten Formmassen verbesserte Eigenschaften gegenüber solchen Formmassen ohne Haftvermittler auf, dennoch ist die Zähigkeit insbesondere die multiaxiale Zähigkeit unbefriedigend.

Weiterhin entstehen bei der Verarbeitung dieser Blends Delaminierungs- und Zersetzungsprobleme, da die Schmelztemperaturen und -viskositäten der einzelnen Polymeren meist eine zu große Differenz für einen verwendbaren Blend aufweisen. Im Hinblick auf die sehr geringe Wasseraufnahme des Polyolefins wäre eine Kombination mit Polyamiden, die insbesondere bei erhöhten Dauergebrauchstemperaturen verwendet werden, jedoch wünschenswert.

Aufgabe der vorliegenden Erfindung war es daher, thermoplastische Formmassen auf der Basis von Polyamiden und Polyolefinen zur Verfügung zu stellen, die die vorstehend geschilderten Nachteile nicht aufweisen und die sich durch eine gute Schlagzähigkeit sowie erhöhte Verarbeitungsstabilität auszeichnen.

Diese Aufgabe wird erfindungsgemäß durch die eingangs definierten thermoplastischen Formmassen gelöst. Bevorzugte Massen dieser Art und deren Verwendung sind den Unteransprüchen zu entnehmen.

Als Komponente A) enthalten die erfindungsgemäßen thermoplastischen Formmassen 4 bis 94, vorzugsweise 20 bis 75 und insbesondere 40 bis 70 Gew.-% eines teilaromatischen, teilkristallinen Copolyamids mit einem Triamingehalt von unter 0,5 Gew.-%, bevorzugt unter 0,3 Gew.-%, aufgebaut aus:

$A_1$) 20 - 90 Gew.-% Einheiten, die sich von Terephthalsäure und Hexamethylendiamin ableiten,

$A_2$) 0 - 50 Gew.-% Einheiten, die sich von $\epsilon$-Caprolactam ableiten und

$A_3$) 0 - 80 Gew.-% Einheiten, die sich von Adipinsäure und Hexamethylendiamin ableiten,

$A_4$) 0 - 40 Gew.-% weiteren polyamidbildenden Monomeren,

wobei der Anteil der Komponente ($A_2$) oder ($A_3$) oder ($A_4$) oder deren Mischungen mindestens 10 Gew.-% beträgt.

Die Komponente $A_1$) enthält 20 - 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide Einheiten, die sich von $\epsilon$-Caprolactam ableiten und/oder Einheiten, die sich von Adipinsäure und Hexamethylendiamin und/oder Einheiten, die sich von weiteren polyamidbildenden Monomeren ableiten.

Der Anteil an Einheiten, die sich von $\epsilon$-Caprolactam ableiten, beträgt maximal 50 Gew.-%, vorzugsweise 20 bis 50 Gew.-%, insbesondere 25 bis 40 Gew.-%, während der Anteil an Einheiten die sich von Adipinsäure und Hexamethylendiamin ableiten, bis zu 80 Gew.-%, vorzugsweise 30 bis 75 Gew.-% und

insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Bevorzugt werden Copolyamide, deren Zusammensetzung im Dreistoffdiagramm innerhalb des durch Eckpunkte $X_1$ bis $X_5$ festgelegten Fünfecks liegt, wobei die Punkte $X_1$ bis $X_5$ folgendermaßen definiert sind:

$X_1$ 40 Gew.-% Einheiten $A_1$)
60 Gew.-% Einheiten $A_3$)
$X_2$ 60 Gew.-% Einheiten $A_1$)
40 Gew.-% Einheiten $A_3$)
$X_3$ 80 Gew.-% Einheiten $A_1$)
5 Gew.-% Einheiten $A_2$)
15 Gew.-% Einheiten $A_3$)
$X_4$ 80 Gew.-% Einheiten $A_1$)
20 Gew.-% Einheiten $A_2$)
$X_5$ 50 Gew.-% Einheiten $A_1$)
50 Gew.-% Einheiten $A_2$)

In der Abbildung ist das durch diese Punkte festgelegte Fünfeck in einem Dreistoffdiagramm dargestellt.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten $A_1$) und 20 bis 50, vorzugsweise 25 bis 40 Gew.-% Einheiten, die sich von ε-Caprolactam ableiten (Einheiten $A_2$)) enthalten, erwiesen.

Neben den vorstehend beschriebenen Einheiten $A_1$) bis $A_3$) können die teilaromatischen Copolyamide in Mengen bis 40, vorzugsweise 10 - 30 Gew.-% und insbesondere 20 - 30 Gew.-% an weiteren polyamidbildenden Monomeren $A_4$) enthalten; wie sie von anderen Polyamiden bekannt sind.

Aromatische Dicarbonsäuren $A_4$) weisen 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4- oder 2,6-Naphtalindicarbonsäure, Phenoxyterephthalsäure, wobei Isophtalsäure besonders bevorzugt sind.

Weitere polyamidbildende Monomere $A_4$) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, ω-Aminoundecansäure und Laurinlactam als Vertreter von Lactamen bzw. Aminocarbonsäuren genannt.

Hierbei sind folgende Zusammensetzungen der Komponente (A) besonders bevorzugt:

$A_1$) 65 bis 85 Gew.-% Einheiten, die sich von Terephthalsäure und Hexamethylendiamin ableiten und
$A_4$) 15 bis 35 Gew.-% Einheiten, die sich von Isophthalsäure und Hexamethylendiamin ableiten
oder
$A_1$) 50 bis 70 Gew.-% Einheiten, die sich von Terephthalsäure und Hexamethylendiamin ableiten und
$A_3$) 10 bis 20 Gew.-% Einheiten, die sich von Adipinsäure und Hexamethylendiamin ableiten und
$A_4$) 20 bis 30 Gew.-% Einheiten, die sich von Isophthalsäure und Hexamethylendiamin ableiten

Enthält die Komponente ($A_4$) 4,4'-substituierte symmetrische Dicarbonsäuren, so empfiehlt es sich, diese mit ($A_1$) und ($A_2$) oder ($A_1$) und ($A_3$) als ternäre Copolyamide aufzubauen, da andernfalls das Copolyamid einen zu hohen Schmelzpunkt aufweist und nur unter Zersetzung schmiltzt, was nicht wünschenswert ist.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 270 °C bis 325 °C, bevorzugt von 280 bis 310 °C, wobei dieser hohe Schmelzpunkt auch mit einer hohen Glasübergangstemperatur von in der Regel mehr als 75, insbesondere mehr als 85 °C (im trockenen Zustand) verbunden ist.

Binäre Copolyamide auf der Basis von Terephthalsäure, Hexamethylendiamin und ϵ-Caprolactam weisen bei Gehalten von etwa 70 Gew.-% an Einheiten, die sich von Terephthalsäure und Hexamethylendiamin ableiten, Schmelzpunkte im Bereich von 300 °C und (im trockenen Zustand) eine Glasübergangstemperatur von mehr als 110 °C auf.

Binäre Copolyamide auf der Basis von Terephthalsäure, Adipinsäure und Hexamethylendiamin erreichen bereits bei niedrigeren Gehalten von etwa 55 Gew.-% Einheiten aus Terephthalsäure und Hexamethylendiamin (HMD) Schmelzpunkte von 300 °C und mehr, wobei die Glastemperatur nicht ganz so hoch liegt wie bei binären Copolyamiden, die anstelle von Adipinsäure bzw. Adipinsäure/HMD ϵ-Caprolactam enthalten.

Bei den teilaromatischen Copolyamide sollen erfindungsgemäß solche verstanden werden, die einen Kristallinitätsgrad > 10 %, bevorzugt > 15 %, und insbesondere > 20 % aufweisen.

Der Kristallinitätsgrad ist ein Maß für den Anteil an kristallinen Fragmenten im Copolyamid und wird durch Röntgenbeugung bestimmt.

Die Herstellung der bevorzugten teilaromatischen Copolyamide mit niedrigem Triamingehalt kann nach den in den EP-A 129 195 und 129 196 beschriebenen Verfahren erfolgen.

Gemäß diesen Verfahren wird eine wäßrige Lösung der Monomeren, d.h. in diesem Fall der Monomeren, die die Einheiten $A_1$) bis $A_4$) bilden, unter erhöhtem Druck unter gleichzeitiger Verdampfung von Wasser und Bildung eines Präpolymeren auf eine Temperatur von 250 bis 300 °C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 250 bis 300 °C polykondensiert. Wesentlich ist bei dem Verfahren, daß die wäßrige Salzlösung unter einem Überdruck von 1 bis 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.-% beträgt.

Durch diese kurzen Verweilzeiten wird die Bildung von Triaminen weitgehend verhindert.

Die verwendeten wäßrigen Lösungen haben in der Regel einen Monomergehalt von 30 bis 70 Gew.-%, insbesondere von 40 bis 65 Gew.-%.

Die wäßrige Salzlösung wird vorteilhaft mit einer Temperatur von 50 bis 100 °C kontinuierlich in eine Verdampferzone geleitet, wo die wäßrige Salzlösung unter einem Überdruck von 1 bis 10, vorzugsweise von 2 bis 6 bar auf eine Temperatur von 250 bis 330 °C erhitzt wird. Es versteht sich, daß die angewandte Temperatur über dem Schmelzpunkt des jeweils herzustellenden Polyamids liegt.

Wie bereits erwähnt, ist es wesentlich, daß die Verweilzeit in der Verdampferzone maximal 60 Sekunden, vorzugsweise 10 bis 55 Sekunden und insbesondere 10 bis 40 Sekunden beträgt.

Der Umsatz beim Austritt aus der Verdampferzone beträgt mindestens 93, vorzugsweise 95 bis 98 % und der Wassergehalt liegt vorzugsweise im Bereich von 2 bis 5, insbesondere 1 bis 3 Gew.-%.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, daß die Menge des mit Wasserdampf freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die bei dem Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der

nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht und in der Regel eine relative Viskosität von 1,2 bis 1,7 hat, wird in eine Polymerisationszone geleitet. In der Polymerisationszone wird die anfallende Schmelze bei einer Temperatur von 250 bis 330 °C, insbesondere 270 bis 310 °C, und unter einem Überdruck von 1 bis 10 bar, insbesondere 2 bis 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 bis 30 Minuten ein. Das so erhaltene Polyamid, das in der Regel eine relative Viskosität von 1,2 bis 2,3 hat, wird kontinuierlich aus der Kondensationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird vorteilhaft in fester Phase mittels überhitztem Wasserdampf bei einer Temperatur unterhalb des Schmelzpunktes, z.B. von 170 bis 240 °C, bis zur gewünschten Viskosität kondensiert. Vorteilhaft verwendet man hierfür den am Kopf der Kolonne anfallenden Wasserdampf.

Die relative Viskosität, gemessen in 1 Gew.-% Lösung in 96 Gew.-% $H_2SO_4$ bei 23 °C, liegt nach der Festphasennachkondensation im allgemeinen im Bereich von 2,2 bis 5,0, vorzugsweise von 2,3 bis 4,5.

Nach einer anderen bevorzugten Arbeitsweise wird die aus der Polykondensationszone ausgetragene Polyamidschmelze in eine weitere Polykondensationszone geleitet und dort unter fortlaufender Ausbildung neuer Oberflächen bei einer Temperatur von 285 bis 310 °C vorteilhaft unter vermindertem Druck, z.B. von 1 bis 500 mbar, bis zur gewünschten Viskosität kondensiert. Geeignete Vorrichtungen sind als Finisher bekannt.

Ein weiteres Verfahren, welches dem vorstehend beschriebenen ähnelt, ist in der EP-A 129 196 beschrieben; wegen weiterer Einzelheiten sei auf die Schrift verwiesen.

Als Komponente A) können auch Mischungen verschiedener Copolyamide eingesetzt werden, wobei das Mischungsverhältnis beliebig ist.

Als Komponente B) enthalten die erfindungsgemäßen Formmassen 4 bis 94, bevorzugt von 23 bis 75 und insbesondere 28 bis 55 Gew.-% eines Polyolefinhomo- oder copolymerisates oder deren Mischungen.

Die Komponente B) weist im allgemeinen ein Schmelzpunkt > 90, bevorzugt > 125 °C und insbesondere > 160 °C auf.

Geeignete Polyolefinhomopolymerisate sind z.B. Polyethylen, Polypropylen und Polybuten, wobei Polypropylen bevorzugt ist.

Geeignete Polyethylene sind Polyethylene sehr niedriger (LLD-PE), niedriger (LD-PE), mittlerer (MD-PE) und hoher Dichte (HD-PE). Es handelt sich dabei um kurz- oder langkettenverzweigte oder lineare Polyethylene, die in einem Hochdruckprozeß in Gegenwart von Radikalstartern (LD-PE) oder in einem Niederdruckprozeß in Gegenwart von sog. komplexen Initiatoren z.B. Phillips- oder Ziegler-Natta Katalysatoren (LLD-PE, MD-PE, HD-PE) hergestellt werden. Die Kurzkettenverzweigungen im LLD-PE bzw. MD-PE werden durch Copolymerisation mit $\alpha$-Olefinen (z.B. Buten, Hexen oder Octen) eingeführt.

LLD-PE weist im allgemeinen eine Dichte von 0,9 bis 0,93 g/cm$^3$ und eine Schmelztemperatur (bestimmt mittels Differentialthermoanalyse) von 120 bis 130 °C auf, LD-PE eine Dichte von 0,915 bis 0,935 g/cm$^3$ und eine Schmelztemperatur von 105 bis 115 °C, MD-PE eine Dichte von 0,93 bis 0,94 g/cm$^3$ und eine Schmelztemperatur von 120 bis 130 °C und HD-PE eine Dichte von 0,94 bis 0,97 g/cm$^3$ und eine Schmelztemperatur von 128 bis 136 °C.

Die Fließfähigkeit gemessen als Schmelzindex MFI beträgt allgemein 0,05 bis 35 g/10'. Der Schmelzflußindex entspricht dabei der Menge an Polymerisat, die innerhalb von 10 Min. aus der nach DIN 53735 genormten Prüfvorrichtung bei einer Temperatur von 190 °C und 2,16 kg Belastung ausgepreßt wird.

Bevorzugt enthalten die erfindungsgemäßen Formmassen Polypropylen als Komponente B).

Geeignete Polypropylene sind dem Fachmann bekannt und werden beispielsweise im Kunststoffhandbuch Band IV, Polyolefine, Carl Hauser Verlag München 1969 beschrieben.

Der Meltvolumenindex MVI nach DIN 53735 beträgt im allgemeinen 0,3 bis 80 g/10 min, vorzugsweise 0,5 bis 35 g/10 min bei 230 °C und 2,16 kg Belastung.

Die Herstellung derartiger Polypropylene erfolgt üblicherweise durch Niederdruckpolymerisation mit metallhaltigen Katalysatoren, beispielsweise mit Hilfe von titan- und aluminiumhaltigen Ziegler-Katalysatoren, oder im Falle des Polyethylens auch durch Phillips-Katalysatoren auf der Basis von chromhaltigen Verbindungen. Die Polymerisationsreaktion kann dabei mit den in der Technik üblichen Reaktoren, sowohl

in der Gasphase, in Lösung oder auch in einer Aufschlämmung durchgeführt werden.

Das Polyethylen oder Polypropylen kann bei der Herstellung der erfindungsgemäßen Polymermischung sowohl als Grieß als auch als Granulat verwendet werden. Es können auch Mischungen des Polyethylens mit Polypropylen eingesetzt werden, wobei das Mischungsverhältnis beliebig ist.

Darüberhinaus eignen sich als Komponente B) Copolymerisate von Ethylen mit α-Olefinen wie Propylen, Buten, Hexen, Penten, Hepten und Octen oder mit nicht konjugierten Dienen wie Norbornadien und Dicyclopentadien. Es sollen unter Copolymerisaten B) sowohl statistische als auch Blockcopolymere verstanden werden.

Statistische Copolymere werden üblicherweise durch Polymerisation einer Mischung verschiedener Monomeren, Blockcopolymere durch nacheinanderfolgende Polymerisation verschiedener Monomere erhalten.

Als Komponente C) enthalten die erfindungsgemäßen Formmassen 2 bis 20, vorzugsweise 2 bis 15 und insbesondere 2 bis 12 Gew.-% eines Haftvermittlers. Es handelt sich hierbei um eine Polymeres, welches eine ausreichende Affinität sowohl zur Komponente A) als auch zu B) aufweist. Entsprechend wird die Grenzflächenspannung zwischen A) und B) reduziert, wobei eine bessere Phasendispergierung erzielt wird.

Geeignete Polymere als Stoffvermittler C) sind die unter B) beschriebenen Polyolefinhomo- und Copolymerisate, welche 0,1 bis 20, vorzugsweise 0,2 bis 10 und insbesondere 0,2 bis 5 Gew.-% (bezogen auf 100 Gew.-% der Komponente C) an funktionellen Monomeren enthalten.

Unter funktionellen Monomeren sollen Carbonsäure-, Säureanhydrid-, Säureamid-, Säureimid-, Carbonsäureester-, Amino-, Hydroxyl-, Epoxid-, Oxazolin-, Urethan-, Harnstoff- oder Lactamgruppen enthaltende Monomere verstanden werden, die eine reaktive Doppelbindung zusätzlich aufweisen.

Beispiele hierfür sind Methacrylsäure, Maleinsäure, Maleinsäureanhydrid, Fumarsäure, Itaconsäure sowie die Alkylester der vorstehenden Säure bzw. dyeren Amide, Maleinsäureimid, Allylamin, Allylalkohol, Glycidylmetharylat, Vinyl- und Isopropenyloxazolin und Methacryloylcaprolactam.

Man kann die funktionellen Monomeren entweder durch Copolymerisation oder Pfropfung in die Polymerkette einführen. Die Pfropfung kann entweder in Lösung oder in der Schmelze erfolgen, wobei gegebenenfalls Radikalstarter wie Peroxide, Hydroperoxide, Perester und Percarbonate mitverwendet werden können.

Derartige Haftvermittler sind allgemein im Handel erhältlich (Polybond ®, Exxelor ®, Hostamont ®, Admer ®, Orevac ® und Epolene ®, Hostaprime®).

Die erfindungsgemäßen Formmassen können 0 bis 20, vorzugsweise 0 bis 15 und insbesondere 0 bis 10 Gew.-% eines schlagzähmodifizierenden Polymeren (auch Schlagzähmodifier, Elastomere oder Kautschuke genannt) enthalten.

Die Komponente D) weist im allgemeinen mindestens eine Elastomerphase auf, deren Erweichungstemperatur unter -25, bevorzugt unter -30 ° C liegt.

Schlagzäh modifizierende Polymere, die die Zähigkeit der Komponente B) erhöhen, sind Copolymere des Ethylens mit Propylen sowie gegebenenfalls einem nicht konjugierten Dien (EP- bzw. EPDU Kautschuke), wobei der Ethylengehalt bevorzugt 45 und insbesondere 50 Gew.-% (bezogen auf 100 Gew.-% der Komponente D)) beträgt.

Derartige Schlagzähmodifier sind allgemein bekannt, weshalb für weitere Einzelheiten hier auf die Publikation von Cartasegna in Kautschuk, Gummi, Kunststoffe 39, 1186-91 (1986) verwiesen sei.

Kautschuke, die die Zähigkeit von Polyamiden erhöhen, weisen i .a. zwei wesentliche Merkmale auf: sie enthalten einen elastomeren Anteil, der eine Glastemperatur von weniger als -10 ° C, vorzugsweise von weniger als -30 ° C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:

EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-$\alpha$-Olefin hergestellt werden. Der Anteil des $\alpha$-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, $\alpha$-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Die erfindungsgemäßen Formmassen können 0 bis 60, bevorzugt bis zu 50 und insbesondere bis zu 40 Gew.-% Zusatzstoffe und Verarbeitungshilfsmittel oder deren Mischungen enthalten.

Als Beispiele für Füllstoffe seien Kohlenstoff- oder Glasfasern in Form von Glasgeweben, Glasmatten oder Glasseidenrovings, Glaskugeln sowie Wollastonit genannt.

Bevorzugte faserförmige Verstärkungsstoffe (Komponente E) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) oder dem Polyolefinpolymerisat (B) mit einer Schlichte und einem Haftvermittler ausgerüstet sein. Im allgemeinen haben die verwendeten Kohlenstoff- und Glasfasern einen Durchmesser im Bereich von 6 bis 20 $\mu$m.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Asbest, Magnesiumcarbonat, Kreide, gepulverter Quarz, Glimmer, Talkum, Feldspat, Bariumsulfat und insbesondere Calciumsilikate wie Wollastonit und Kaolin (insbesondere kalzinierter Kaolin).

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Die erfindungsgemäßen Formmassen können weiterhin Flammschutzmittel in Mengen von 0 bis 25 Gew.-%, bevorzugt bis 15 Gew.-%, bezogen auf das Gesamtgewicht der Formmassen, enthalten.

Es kommen alle bekannten Flammschutzmittel in Betracht, wie z.B. Polyhalogendiphenyl, Polyhalogendiphenylether, Polyhalogenphthalsäure und ihre Derivate, Polyhalogenoligo- und -polycarbonate, wobei die

entsprechenden Bromverbindungen besonders wirksam sind.

Beispiele hierfür sind Polymere des 2,6,2',6'-Tetrabrombisphenols A der Tetrabromphthalsäure, des 2,6-Dibromphenols und 2,4,6-Tribromphenols und deren Derivate.

Bevorzugtes Flammschutzmittel ist elementarer roter Phosphor. In der Regel kann der elementare Phosphor mit z.B. Polyurethanen oder anderen Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt ist 1,2,3,4,7,8,9,10,13,13,14,14-Dodecachloro-1,4,4a,5,6,6a,7,10,10a,11,12,12a-dodecahydro-1,4:7,10-dimethanodibenzo(a,e)-cyclooctan (Dechlorane®Plus, Occidental Chemical Corp.) und gegebenenfalls einem Synergisten z.B. Antimontrioxid.

Weitere Phosphorverbindungen sind Organophosphorverbindungen wie Phosphonate, Phosphinate, Phosphonate, Phosphinite, Phosphinoxide, Phosphine, Phosphite oder Phosphate sind ebenfalls bevorzugt. Als Beispiel sei Triphenylphosphinoxid genannt. Dieses kann allein oder vermischt mit Hexabrombenzol oder einem chlorierten Biphenyl oder rotem Phosphor und, wahlweise, Antimonoxid verwendet werden.

Typische für die bevorzugten Phosphorverbindungen, die gemäß in der vorliegenden Erfindung verwendet werden können, sind solche der folgenden allgemeinen Formel

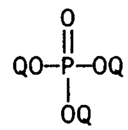

worin Q für Wasserstoff oder für gleiche oder verschiedene Kohlenwasserstoffreste oder Halogenkohlenwasserstoffreste, wie Alkyl, Cycloalkyl, Aryl, alkylsubstituiertes Aryl und arylsubstituiertes Alkyl steht, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl-bis-(3-5,5'-trimethylhexylphosphat), Ethyldiphenylphosphat, 2-Ethylhexyldi(p-toluyl)phosphat, Diphenylhydrogenphosphat, Bis-(2-ethylhexyl)phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phopshonitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis-(hydroxymethyl)phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Weiterhin können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.-%, bezogen auf das Gesamtgewicht der Komponenten A) bis E).

Übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zugesetzt werden können, sind z.B. sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Materialien zur Erhöhung der Abschirmung gegen elektromagnetische Wellen wie Metallflocken, -pulver, -fasern, metallbeschichtete Füllstoffe können mitverwendet werden.

Gleit- und Entformungsmittel, die in der Regel in Mengen bis zu 5 Gew.-% der thermoplastischen Masse zugesetzt werden, sind Stearinsäure sowie deren Alkali- und Erdalkalisalze, Stearylalkohol, Stearinsäurealkylester und -amide sowie Ester des Glycerins oder Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Antimons, Zinns, Magnesiums und Bors genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die erfindungsgemäßen thermoplastischen Formmassen können nach an sich bekannten Verfahren hergestellt werden, indem man die Ausgangskomponenten in üblichen Mischvorrichtungen wie Schneckenextrudern vorzugsweise Zweischneckenextrudern, Brabender- oder Banbury-Mühlen sowie Knetern mischt. Nach der Extrusion wird das Extrudat abgekühlt und zerkleinert.

Die erfindungsgemäßen Formmassen zeichnen sich durch gute mechanische Eigenschaften, insbesondere eine gute Schlagzähigkeit aus. Die Verarbeitung zu Formkörpern erfolgt ohne nennenswerte Delaminierung oder Zersetzungen und ist in einem hohen Maße reproduzierbar.

Aufgrund dieser Eigenschaften eignen sich Formkörper aus den erfindungsgemäßen Formmassen für Bauteile im Maschinenbau, Sportartikelsektor usw.

Beispiele

Zur Herstellung von erfindungsgemäßen Formmassen und Vergleichsprodukten wurden folgende Komponenten eingesetzt:

Komponente A/1

Copolyamid mit 70 Gew.-% Einheiten, die sich von Terephthalsäure und Hexamethylendiamin ableiten, und 30 Gew.-% Einheiten, die sich von $\epsilon$-Gaprolactam ableiten. Dieses Produkt wurde wie folgt hergestellt: Eine wäßrige Lösung, bestehend aus 35 kg $\epsilon$-Caprolactam, 55 kg Terephthalsäure, 38,5 kg Hexamethylendiamin und 128,5 kg Wasser wurde aus einem beheizten Vorratsbehälter bei ca. 80 °C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 295 °C hatte, bei kräftiger Umwälzung beheizt. Der Verdampfer hatte eine Länge von 3 m und einen Inhalt von 180 ml und eine wärmeübertragende Oberfläche von etwa 1300 $cm^2$. Die Verweilzeit im Verdampfer betrug 50 sec. Das aus dem Verdampfer austretende Gemisch aus Präpolymeren und Wasserdampf hatte eine Temperatur von 290 °C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152 °C ein. Der nach dem Entspannungsventil asutretende Wasserdampf wurde kondensiert und hatte einen Gehalt an Hexamethylendiamin von weniger als 0,05 Gew.-% und einen Gehalt an $\epsilon$-Caprolactam von weniger als 0,1 Gew.-%. Als Kolonnensumpf erhielt man eine wäßrige Lösung von Hexamethylendiamin, die 80 Gew.-% Hexamethylendiamin und 1 bis 3 % $\epsilon$-Caprolactam, jeweils bezogen auf erzeugtes Polyamid enthielt. Diese Lösung wurde über eine Pumpe vor dem Eintritt in den Verdampfer wieder der Ausgangssalzlösung zugegeben.

Nach dem Verdampfer hatte das Präpolymere eine relative Viskosität von 1,25, gemessen in 98 gew.-%iger Schwefelsäure bei 20 °C und wies nach der Endgruppenanalyse einen Umsatz von 93 bis 95 % auf. Der Gehalt an Bis-hexamethylentriamin betrug 0,1 bis 0,15 Gew.-%, bezogen auf Polyamid.

Nach Austritt der Polymerschmelze aus dem Abscheider hatte das Polyamid eine sehr helle Eigenfarbe und einen äußerst niedrigen Gehalt an Bis-hexamethylentriamin von 0,17 % sowie eine relative Viskosität von 1,65 bis 1,80.

Das Produkt wies in etwa eine Äquivalenz von Carboxyl- und Aminoendgruppen auf.

Der Gehalt an extrahierbaren Anteilen (Extraktion mit Methanol) betrug 3,1 bis 3,3 Gew.-%.

Im Austragsextruder wurde die Schmelze dann auf Normaldruck entspannt und bei einer Verweilzeit von weniger als 1 Minute praktisch nicht mehr weiter kondensiert. Das erhaltene Granulat wurde durch kontinuierliche Festphasenkondensation mit überhitztem Wasserdampf bei 195 °C und einer Verweilzeit von 30 Stunden auf eine Endviskosität von $\eta$-rel = 2,50 kondensiert. Der Gehalt an extrahierbaren Anteilen betrug dann 0,2 Gew.-% (Methanolextrakt).

Vergleichskomponenten:

A/V1: Polyamid 6 mit einer relativen Viskosität $\eta$-rel (in konz. Schwefelsäure, 23 °C, 1 g/dl) von 3,3
A/V2: Polyamid 66 mit einer relativen Viskosität $\eta$-rel (in konz. Schwefelsäure, 23 °C, 1 g/dl) von 2,5
Komponenten B

| | MVI (230/2,16) [g/10'] (DIN 53 735) | Zug-E-Modul [N/mm$^2$] (DIN 53 457) | Schmelzpunkt [°C] (ISO 3146) |
|---|---|---|---|
| B/1 Polypropylen (Novolen® 1100H der BASF AG) | 2.5 | 1400 | 165 |
| B/2 Polypropylen (Novolen® 1300L der BASF AG) | 7 | 650 | 158 |
| B/3 Blockcopolymer Polypropylen (Novolen® 2300KX der BASF AG) | 6 | 1250 | 162 |
| B/4 Randomcopolymer (Novolen® 3200HX der BASF AG) | 2.5 | 800 | 146 |

Komponenten C

C/1: Polypropylen gepfropft mit 6 Gew.-% Acrylsäure (MFI (Iso 1133) = 40 g/10') (Polybond ® 1001 der Firma BP)

C/2: Polypropylen gepfropft mit 0,3 Gew.-% Maleinsäureanhydrid (Exxelor ® PO 2011 der Firma Exxon)

C/3: mit 0,2 modifiziertes Polypropylen; MFI (230/2,16) = 4, Schmelzpunkt = 165 °C (Admer ® QF 500 E von Mitsui Petrochemical Ind.).

Komponenten D

D/1: MSA-modifizierter EP-Kautschuk (0,7 % MSA) MFI (230/2,16) = 3 (Exxelor ® VA 1803 der Firma Exxon

D/2: Terpolymeres aus Ethylen, n-Butylacrylat und Acrylsäure (60/35/5) MFI (190/2,16) = 10 g/10'

Komponente E

Glasfasern mit einer Polyurethanschlichte (mittlerer Faserdurchmesser: 10 $\mu$).

Herstellung der Formmassen

Die Komponenten A) bis D) wurden bei 260 °C (V1*), 280 °C (V2*) und 310 °C (1-6) in einem Zweischneckenextruder eindosiert, aufgeschmolzen und gegebenenfalls die Komponente E) in einer 2. Zone des Extruders über eine Stopfschnecke zudosiert. Die Schmelze wurde ausgetragen, durch ein Wasserbad geleitet und granuliert.

Das Granulat wurde bei den o.g. Temperaturen zu Normprüfkörpern bzw. Rundscheiben (Ø = 60 mm) auf einer Spritzgußmaschine verarbeitet. Es wurden folgende Messungen durchgeführt:
Kerbschlagzähigkeit $a_K$ [kJ/m$^2$] nach DIN 53453
Durchstoßarbeit $W_{50}$ [Nm] nach DIN 53443
Die Zusammensetzungen der Formmassen und die Ergebnisse der Messungen sind der Tabelle zu entnehmen.

Tabelle

| Bsp. | Zusammensetzung [Gew.-%] | | | | | $a_K$ [kJ/m2] | $W_{50}$ [Nm] |
|---|---|---|---|---|---|---|---|
| V1* | A/V1 60 | B/2 35 | C/3 5 | -- | -- | 14 | 9.1 |
| V2* | A/V2 60 | B/2 35 | C/3 5 | -- | -- | 12 | 0.5 |
| 1 | A/1 60 | B/2 35 | C/3 5 | -- | -- | 17 | 16 |
| 2 | A/1 55 | B/1 35 | C/2 5 | D/1 5 | -- | 18 | 21 |
| 3 | A/1 55 | B/1 40 | C/1 2 | D/1 3 | -- | 16 | 12 |
| 4 | A/1 50 | B/3 45 | C/1 5 | -- | -- | 17 | 19 |
| 5 | A/1 60 | B/4 30 | C/3 10 | -- | -- | 20 | 24 |
| 6 | A/1 40 | B/1 35 | C/1 5 | -- | E 30 | 8.4 | n.b. |

*) zum Vergleich
Die Mischungen enthielten zusätzlich 0,25 Gew.-% Talkum bezogen auf 100 Gew.-% A) bis E)

## Patentansprüche

**1.** Thermoplastische Formmassen, enthaltend
A) 4 - 94 Gew.-% eines teilaromatischen, teilkristallinen Copolyamids mit einem Diamingehalt von

unter 0,5 Gew.-% aufgebaut aus

($A_1$) 20 - 90 Gew.-% Einheiten, die sich von Terephthalsäure und Hexamethylendiamin ableiten,
($A_2$) 0 - 50 Gew.-% Einheiten, die sich von $\epsilon$-Caprolactam ableiten
($A_3$) 0 - 80 Gew.-% Einheiten, die sich von Adipinsäure und Hexamethylendiamin ableiten,
($A_4$) 0 - 40 Gew.-% weiteren polyamidbildenden Monomeren

wobei der Anteil der Komponenten ($A_2$) oder ($A_3$) oder ($A_4$) oder deren Mischungen mindestens 10 Gew.-% beträgt,

B) 4 - 94 Gew.-% eines Polyolefinhomo- oder copolymerisats oder deren Mischungen,
C) 2 - 20 Gew.-% eines Haftvermittlers,
D) 0 - 20 Gew.-% eines schlagzäh modifizierenden Polymeren
E) O - 60 Gew.-% Zusatzstoffe und Verarbeitungshilfsmittel.

**2.** Thermoplastische Formmassen nach Anspruch 1, in denen die Komponente B) aus Polypropylen oder Polyethylen oder einem Ethylen-Propylencopolymer oder deren Mischungen besteht.

**3.** Thermoplastische Formmassen nach den Ansprüchen 1 und 2, in denen die Komponente C) aus einem Homo- oder Copolymer eines $\alpha$-Olefins aufgebaut ist, welches von 0,1 bis 20 Gew.-%, bezogen auf 100 Gew.-% der Komponente C) an funktionellen Monomeren enthält.

**4.** Thermoplastische Formmassen nach den Ansprüchen 1 bis 3, dadurch gekennzeichnet, daß die teilaromatischen Copolyamide A)

$A_1$) 50 - 80 Gew.-% Einheiten, die sich von Terephthalsäure und Hexamethylendiamin ableiten, und
$A_2$) 20 - 50 Gew.-% Einheiten, die sich von $\epsilon$-Caprolactam ableiten

**5.** Thermoplastische Formmassen nach den Ansprüchen 1 bis 3, dadurch gekennzeichnet, daß die teilaromatischen Copolyamide A)

$A_1$) 25 - 70 Gew.-% Einheiten, die sich von Terephthalsäure und Hexamethylendiamin ableiten, und
$A_3$) 30 - 75 Gew.-% Einheiten, die sich von Adipinsäure und Hexamethylendiamin ableiten,

enthalten.

**6.** Thermoplastische Formmassen nach den Ansprüchen 1 bis 3, dadurch gekennzeichnet, daß die teilaromatischen Copolyamide A)

$A_1$) 50 bis 70 Gew.-% Einheiten, die sich von Terephthalsäure und Hexamethylendiamin ableiten und
$A_3$) 10 bis 20 Gew.-% Einheiten, die sich von Adipinsäure und Hexamethylendiamin ableiten und
$A_4$) 20 bis 30 Gew.-% Einheiten, die sich von Isophthalsäure und Hexamethylendiamin ableiten

enthalten.

**7.** Thermoplastische Formmassen nach den Ansprüchen 1 bis 6, in denen die Komponente A) einen Schmelzpunkt von 270 °C bis 325 °C aufweist.

**8.** Verwendung der thermoplastischen Formmassen gemäß den Ansprüchen 1 bis 7 zur Herstellung von Folien, Fasern und Formkörpern.

**9.** Formkörper, erhältlich aus den thermoplastischen Formmassen gemäß den Ansprüchen 1 bis 7.

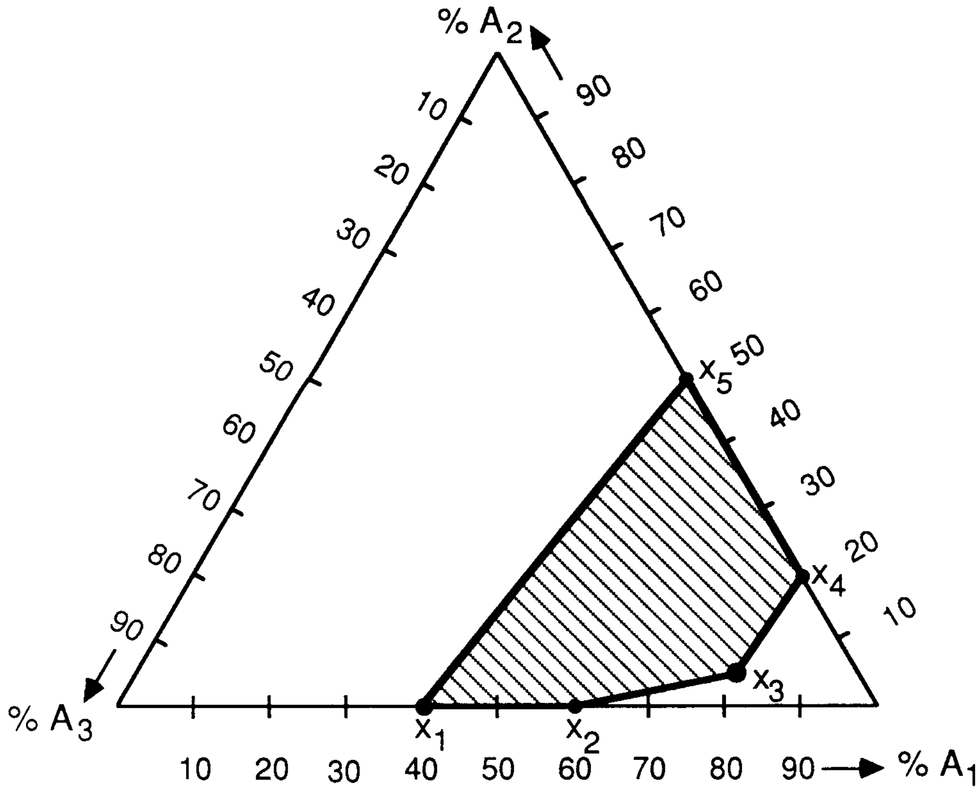
% A2
% A3
% A1
10
20
30
40
50
60
70
80
90
x1
x2
x3
x4
x5

Europäisches Patentamt

# EUROPÄISCHER RECHERCHENBERICHT

Nummer der Anmeldung

EP 92 10 9047

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 225 584 (ICI)<br>--- | | C 08 L 77/00<br>C 08 L 23/10 //<br>(C 08 L 77/00<br>C 08 L 23:10 )<br>(C 08 L 23/10<br>C 08 L 77:00 ) |
| A | EP-A-0 330 015 (BASF)<br>--- | | |
| A | EP-A-0 291 796 (BAYER)<br>--- | | |
| A | PATENT ABSTRACTS OF JAPAN, Band 11, Nr. 398 (C-466), 25. Dezember 1987; & JP-A-62 158 739 (TONEN SEKIYUKAGAKU) 14-07-1987<br>--- | | |
| A | PATENT ABSTRACTS OF JAPAN, Band 10, Nr. 182 (C-356), 25. Juni 1986; & JP-A-61 028 539 (MITSUI) 08-02-1986<br>--- | | |
| A | PATENT ABSTRACTS OF JAPAN, Band 13, Nr. 145 (C-583), 10. April 1989; & JP-A-63 305 148 (SHOWA) 13-12-1988<br>----- | | |
| | | | RECHERCHIERTE SACHGEBIETE (Int. Cl.5) |
| | | | C 08 L |

Der vorliegende Recherchenbericht wurde für alle Patentansprüche erstellt

| Recherchenort | Abschlußdatum der Recherche | Prüfer |
|---|---|---|
| DEN HAAG | 23-09-1992 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)